# EUROPEAN PATENT APPLICATION

(11) **EP 4 039 652 A1**
(43) Date of publication of application: **10.08.2022**
(21) Application number: 20872124.1
(22) Date of filing: 03.09.2020
(51) Int. Cl.: C01G 53/00, H01M 4/131, H01M 4/505, H01M 4/525, H01M 4/62, H01M 10/052

(54) **POSITIVE ELECTRODE FOR NON-AQUEOUS ELECTROLYTE SECONDARY BATTERY AND NON-AQUEOUS ELECTROLYTE SECONDARY BATTERY**

(30) Priority: 30.09.2019 JP 2019179619
(71) Applicant: Panasonic Intellectual Property Management Co., Ltd., Osaka-shi, Osaka 540-6207 (JP)
(72) Inventor: HARADA, Tomohiro, Osaka-shi, Osaka 540-6207 (JP); YAMAMOTO, Rina, Osaka-shi, Osaka 540-6207 (JP)
(74) Representative: Novagraaf International SA
(86) International application number: PCT/JP2020/033371
(87) International publication number: WO 2021/065320

(57) **Abstract**

A positive electrode for a nonaqueous electrolyte secondary battery includes a positive electrode mixture layer, wherein the positive electrode mixture layer includes a positive electrode active material, a first binder, and a second binder; the positive electrode active material includes a composite oxide represented by the following formula (1): LiₐNiₓCo_{y}Me_{(1-x-y)}O₂ (1), where 0.97 ≦ a ≦ 1.2, 0.5 ≦ x ≦ 1, and 0 ≦ y ≦ 0.1; the element Me is at least one selected from the group consisting of Al, Mn, B, W, Sr, Mg, Mo, Nb, Ti, Si, and Zr; the first binder is a polymeric binder comprising at least a vinylidene fluoride unit; the second binder is a polymeric binder comprising at least a diene unit; and a ratio of the second binder to a total amount of the first binder and the second binder is 5 mass% or more and 35 mass% or less.

## Description

### [Technical Field]

The present disclosure relates to a positive electrode for a nonaqueous electrolyte secondary battery and a nonaqueous electrolyte secondary battery.

### [Background Art]

Nonaqueous electrolyte secondary batteries such as lithium ion secondary batteries are used, for example, in applications for ICT such as personal computers and smart phones, in-vehicle applications, and power storage applications. In such an application, the nonaqueous electrolyte secondary battery is required to have a higher capacity. As one of the methods of increasing the capacity of the nonaqueous electrolyte secondary battery, there may be mentioned a method in which the density of the positive electrode active material is increased in the positive electrode.

PLT 1 proposes a positive electrode for a lithium secondary battery comprising a positive electrode active material layer containing a large particle size active material having an average particle size of 1 µm to 20 µm and a small particle size active material having an average particle size of 5 nm to 100 nm, wherein a filling rate of the active material is 80% or more.

PLT 2 proposes a nonaqueous electrolyte secondary battery in which particles A of a layered lithium transition metal oxide and particles B of a spinel-type lithium transition metal oxide are included as a positive electrode active material in a range of a specific weight ratio; in particle size distribution of the positive electrode active material, a peak based on particles A and a peak based on particles B in a range of 1 to 50 µm are included; a particle size (D50) of particles A and a particle size (D50) of particles B satisfy a specific formula, and a particle size (D95) of particles A and a particle size (D95) of particles B satisfy a specific formula in a volume-based particle size distribution.

PLT 3 proposes a positive electrode active material powder for use in the positive electrode for a lithium secondary battery: the positive electrode active material powder contains a first granular powder and a second granular powder in a range of a specific weight ratio; the first granular powder is formed by agglomerating a large number of fine particles of the lithium composite oxide represented by the general formula LiₚNiₓCo_{y}Mn_{z}M_{q}Fₐ, the first granular powder has an average particle size D50 of 3-15 µm, and a compressive fracture strength of 50MPa or more, and the second granular powder has a compressive fracture strength of less than 40MPa.

### [Citation List]

### [Patent Literature]

PLT1: Japanese Laid-Open Patent Publication No. 2009-146788
PLT2: WO 2014/041793
PLT3: WO 2005/020354

### [Summary of Invention]

In PLTs 1 and 2, particle size control is complicated. Further, when a group of positive electrode active material particles having different average particle sizes is used, the dispersion state tends to be nonuniform. When a positive electrode active material particle group having different strengths as in PLT 3 is used, the types of the positive electrode active material to be used in combination are limited.

It is considered that the density of the positive electrode active material can be increased without using a group of positive electrode active material particles having different average particle sizes or using a group of positive electrode active material particles having different strengths if the positive electrode active material particles can be finely powdered when a positive electrode for a nonaqueous electrolyte secondary battery is produced.

One aspect of the present disclosure includes a nonaqueous electrolyte secondary battery including a positive electrode mixture layer, wherein
the positive electrode mixture layer includes a positive electrode active material, a first binder, and a second binder,
the positive electrode active material includes a composite oxide represented by the following formula (1):

   LiₐNiₓCo_{y}Me_{(1-x-y)}O₂ (1)
where 0.97 ≦ a ≦ 1.2, 0.5 ≦ x ≦ 1, and 0 ≦ y ≦ 0.1, the element Me is at least one selected from the group consisting of Al, Mn, B, W, Sr, Mg, Mo, Nb, Ti, Si, and Zr,
the first binder is a polymeric binder comprising at least a vinylidene fluoride unit,
the second binder is a polymeric binder comprising at least a diene unit, and
a ratio of the second binder to a total amount of the first binder and the second binder is 5 mass% or more and 35 mass% or less.

Another aspect of the present disclosure relates to a nonaqueous electrolyte secondary battery comprising the positive electrode, negative electrode, and lithium ion conductive nonaqueous electrolyte described above.

In the positive electrode of a nonaqueous electrolyte secondary battery, a high positive electrode active material density can be secured.

### [Brief Description of Drawing]

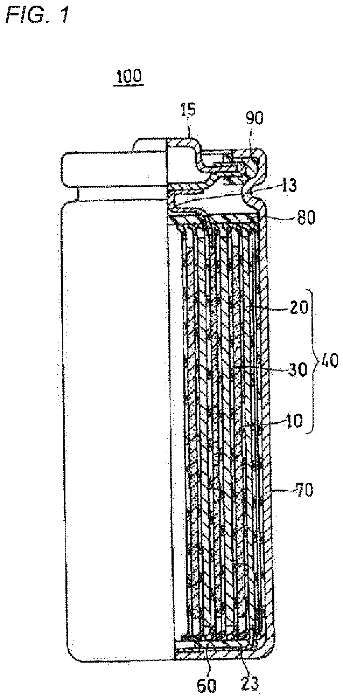

[FIG. 1] FIG. 1 is a vertical cross-sectional view schematically showing a nonaqueous electrolyte secondary battery according to an embodiment of the present disclosure.

### [Description of Embodiments]

The positive electrode for a nonaqueous electrolyte secondary battery in one embodiment of this disclosure includes a positive electrode mixture layer. The positive electrode usually includes a positive electrode mixture layer and a positive electrode current collector. The positive electrode mixture layer includes a positive electrode active material, a first binder, and a second binder.

The positive electrode active material includes a composite oxide represented by the following formula (1):

LiₐNiₓCo_{y}Me_{(1-x-y)}O₂ (1)

where 0.97 ≦ a ≦ 1.2, 0.5 ≦ x ≦ 1, and 0 ≦ y ≦ 0.1, the element Me is at least one selected from the group consisting of Al, Mn, B, W, Sr, Mg, Mo, Nb, Ti, Si, and Zr. Hereinafter, the composite oxide represented by formula (1) may be referred to as oxide (1).

The first binder is a polymeric binder containing at least a vinylidene fluoride unit. The second binder is a polymeric binder containing at least a diene unit. The ratio of the second binder to a total amount of the first binder and the second binder is 5 mass% or more and 35 mass% or less. In the present specification, the diene unit in the second binder also includes a hydrogenated diene unit.

The particles of oxide (1) tend to have relatively high compressive fracture strength. Since such particles are difficult to be micronized when forming the positive electrode mixture layer, there is a limit in highly packing the particles in the positive electrode mixture layer. According to the present disclosure, as described above, when the positive electrode active material containing oxide (1) is used, the first binder and the second binder are used at a specific ratio. By using the first binder and the second binder at a specific ratio, the dispersion state of the first binder in the positive electrode mixture can be appropriately controlled, and the ratio of the crystal portion of the first binder can be increased. Since the crystal portion of the first binder has rigidity, the friction coefficient of the positive electrode mixture can be appropriately increased. The positive electrode mixture layer is formed by pressurizing the positive electrode mixture. Therefore, stress caused by the pressurization of the positive electrode mixture is easily applied to the particles of oxide (1) when the positive electrode mixture layer is formed, and the particles are easily cracked. As a result, since the positive electrode active material can be highly packed in the positive electrode mixture layer, the active material density in the positive electrode can be increased.

When the ratio of the second binder to the total amount of the first binder and the second binder is more than 35 mass% or less than 5 mass%, in both cases, the friction coefficient of the positive electrode mixture layer becomes low, making it difficult to increase the active material density in the positive electrode mixture layer. When the ratio of the second binder exceeds 35 mass%, the dispersion state of the first binder cannot be kept suitably, the crystallinity of the first binder is lowered, and the rigidity is lowered, so that the friction coefficient of the positive electrode mixture layer is lowered. Further, when the ratio of the second binder is less than 5 mass%, influences of the physical properties of the first binder are dominant, and the effect of adding the second binder is hardly obtained.

The ratio of the second binder is 35 mass% or less, or may be 34 mass% or less. The ratio of the second binder is 5 mass% or more, or may be 8 mass% or more.

The total amount of the first binder and the second binder occupies the positive electrode mixture layer by, for example, 0.1 mass% or more, and preferably 0.4 mass% or more. The ratio of the total amount of the first binder and the second binder is, for example, 3 mass% or less, and preferably 1.5 mass% or less. When the ratio of the total amount of the first binder and the second binder is in such a range, it is possible to ensure a highly packed positive electrode active material while securing a high capacity.

The composition of oxide (1) is the composition of the positive electrode of the nonaqueous electrolyte secondary battery in a fully charged state. In oxide (1), the value "a" indicating the molar ratio of lithium is increased or decreased by charging and discharging.

"Fully charged" means when the rated capacity of a battery is regarded as C, the battery is charged until, for example, its state of charge (SOC: State of Charge) becomes 0.98 × C or more. The composition of oxide (1) in a fully charged state is obtained by washing a positive electrode taken out from a battery in a fully charge state using ethyl methyl carbonate (EMC) and drying the positive electrode. More specifically, a predetermined amount of the positive electrode mixture is collected from the positive electrode after drying, and quantitative analysis of the element is performed by inductively coupled plasma emission spectrometry, whereby the composition of oxide (1) can be determined.

The friction coefficient of the positive electrode mixture layer is preferably 0.3 or more, and may be 0.31 or more. When the friction coefficient of the positive electrode mixture layer is in such a range, it is possible to ensure a state in which the lubricity of the particles of oxide (1) is low in the positive electrode mixture. Therefore, when the positive electrode mixture layer is formed, particles of oxide (1) can be more easily micronized. The friction coefficient of the positive electrode mixture layer is preferably 0.5 or less, and may be 0.4 or less. When the friction coefficient of the positive electrode mixture layer is in such a range, it is possible to secure an appropriate lubricity of particles of oxide (1), and it is advantageous for highly packing the positive electrode active material in the positive electrode mixture layer because the particles can be arranged easily in the positive electrode mixture layer.

In the present specification, the friction coefficient of the positive electrode mixture layer means the coefficient of static friction. The friction coefficient of the positive electrode mixture layers is measured according to the test methods of Plastics-Film and sheeting-Determination of the coefficients of friction of JIS K 7125:1999. The friction coefficient of the positive electrode mixture layer is measured as follows: a positive electrode before assembling a nonaqueous electrolyte secondary battery is used, or the positive electrode of a nonaqueous electrolyte secondary battery is taken out; washed using EMC and dried; and the positive electrode mixture layer of the positive electrode is subjected to measurement. The friction coefficient is measured using, for example, a precision universal tester (AUTOGRAPH AG-X plus) manufactured by Shimadzu Corporation.

Thus, according to the present disclosure, particles of oxide (1) can be highly packed in the positive electrode mixture layer, so that the density of the positive electrode active material can be increased. More specifically, the density of the positive electrode active material in the positive electrode mixture layer can be increased to, for example, 3.67g/cm³ or more (preferably 3.68g/cm³ or more). Although the upper limit of the density of the positive electrode active material is not particularly limited, the density of the positive electrode active material may be 3.75g/cm³ or less in view of easily securing high cycle characteristics.

The positive electrode active material density in the positive electrode mixture layer can be determined by the following procedure, for a positive electrode before assembling a nonaqueous electrolyte secondary battery, or for a positive electrode mixture layer of a positive electrode taken out from a nonaqueous electrolyte secondary battery and washed using EMC and dried. The thickness of the positive electrode mixture layer is measured with respect to a relatively flat region having a size of 50 mm in length and 50 mm in width, excluding the connecting portion of the lead, etc., of the positive electrode mixture layer. The apparent volume of the positive electrode mixture layer in this region is determined from the length, width, and thickness. The positive electrode mixture in this region is peeled from the positive electrode current collector, and quantitative analysis of the element is performed by inductively coupled plasma emission spectrometry or atomic absorption spectrometry, whereby the mass of the positive electrode active material is determined. By dividing this mass by the apparent volume, the density of the positive electrode active material in the positive electrode mixture layer is obtained.

In view of ensuring a higher capacity, in oxide (1), the ratio x of Ni may be 0.8 ≦ x ≦ 1. When the ratio of Ni is large, the particles are hardly crushed when the positive electrode mixture layer is formed. According to the present disclosure, as described above, by using the first binder and the second binder at a specific ratio, particles of the positive electrode active material containing oxide (1) are easily finely powdered. Therefore, even when 0.8 ≦ x ≦ 1 is satisfied, the particles of oxide (1) can be easily micronized, and the positive electrode active material can be highly packed in the positive electrode mixture layer.

In view of easily ensuring higher thermal stability of oxide (1), in oxide (1), the element Me preferably contains at least Al. In addition, when the element Me contains Al, particles of oxide (1) are hardly pulverized when the positive electrode mixture layer is formed. According to the present disclosure, by using the first binder and the second binder at a specific ratio, particles of the positive electrode active material containing oxide (1) is easily finely powdered. Therefore, even when the element Me contains at least Al, the particles of oxide (1) can be easily micronized, and the positive electrode active material can be highly packed in the positive electrode mixture layer.

When the element Me contains at least Al, the ratio y of Co may be 0.01 ≦ y. In this case, it is possible to increase the compressive fracture strength of the particles of oxide (1), and it is possible to increase the efficiency of micronization of the particles. In view of cost reduction, y ≦ 0.05 is preferable.

When Me contains Al, it may further contain Mn. In this case, it is possible to suppress an increase in compressive fracture strength of the particles of oxide (1), so that the particles can be more easily micronized. The atomic ratio (=Mn/Al) of Mn to Al is preferably 0.9 or less. In this case, it is easy to secure higher capacity and cycle characteristics. In addition, the crystal structure of oxide (1) is easily stabilized. Mn/Al ratio may be 0.7 or less. In view of easily ensuring high thermal stability, Mn/Al ratio is preferably 0.4 or more.

Hereinafter, the configuration of the nonaqueous electrolyte secondary battery will be described more specifically.

### (Positive electrode)

The positive electrode includes a positive electrode mixture layer. The positive electrode usually includes a positive electrode current collector holding the positive electrode mixture layer. The positive electrode mixture layer may be formed on one surface of the positive electrode current collector, or may be formed on both surfaces thereof.

As the positive electrode current collector, for example, a metal foil can be used. As a metal composing the positive electrode current collector, for example, aluminum (Al), titanium (Ti), alloys containing these metal elements, stainless steel, and the like can be used.

The positive electrode mixture layer includes a positive electrode active material, a first binder and a second binder as essential components, and may include a conductive agent, an additive, and the like as an optional component. As the additive, for example, a known material can be used.

The positive electrode active material includes oxide (1). Oxide (1) includes a crystal structure of layered rock salt type. Since the ratio of Ni is high, oxide (1) is advantageous for high capacity and low cost. In addition, since oxide (1) contains Co, it is advantageous for extending the life of the battery.

In oxide (1), the element Me is preferably at least one selected from the group consisting of Al, Mn, W, Mg, Mo, Nb, Ti, Si, and Zr. Mn, W, Nb, Mg, Zr, etc. are considered to contribute to stabilization of the crystal structure.

In oxide (1), the atomic ratio Co/Al may be set to 0 to 1.0.

The positive electrode active material may include oxides other than oxide (1). Other oxides include, for example, Li_{α}CoO₂, Li_{α}NiO₂, Li_{α}MnO₂, Li_{α}Co_{β}M_{1-β}O_{y} (M is at least one selected from the group consisting of Na, Mg, Sc, Y, Mn, Fe, Cu, Zn, Al, Cr, Pb, Sb, and B), LiMPO₄ (M is at least one selected from the group consisting of Na, Mg, Sc, Y, Mn, Fe, Co, Ni, Cu, Zn, Al, Cr, Pb, Sb, and B) and the like. Here, 0 < α ≦ 1.1, 0 ≦ β ≦ 0.9, and 2 ≦ γ ≦ 2.3 are satisfied. The value "a" indicating the molar ratio of lithium is increased or decreased by charging and discharging. The composition in these oxides is, as in the case of oxide (1), the composition in a fully charged state.

The ratio of oxide (1) in the entire positive electrode active material is, for example, 50 mass% or more, 80 mass% or more, or 90 mass% or more. The positive electrode active material may be composed of only oxide (1).

The positive electrode mixture layer includes at least a first binder and a second binder as the binder. The positive electrode mixture may include a third binder other than the first binder and the second binder.

The first binder is a polymeric binder comprising at least a vinylidene fluoride (VDF) unit. Examples of the first binder include polyvinylidene fluoride (PVDF), and a copolymer containing a VDF unit and a comonomer unit. Examples of the copolymer include a copolymer of at least one selected from the group consisting of an olefin unit and a halogenated olefin unit and VDF. Examples of the olefin include ethylene and propylene. Examples of the halogenated olefin include an olefin having at least one of fluorine and chlorine. The halogenated olefin may be, for example, perfluoroolefin. Examples of the perfluoroolefin include tetrafluoroethylene and hexafluoropropylene. However, these comonomers are merely illustrative, and not limited to these.

The ratio of the VDF unit in the VDF copolymer is, for example, 50 mol% or more, or may be 80 mol% or more.

The second binder includes a diene unit. Examples of the diene unit include a conjugated diene unit, a non-conjugated diene unit, or a hydrogenated product thereof. It is preferable that the second binder contains at least a conjugated diene unit or a hydrogenated product thereof. Examples of the conjugated diene unit include a butadiene unit, an isoprene unit, a pentadiene unit, or a substituted product thereof. Examples of the butadiene unit include a 1,3-butadiene unit and a 2,3-dimethyl-1,3-butadiene unit. The second binder may contain one kind diene unit, or two or more kinds thereof.

The second binder may include other comonomer units other than diene units. Examples of the other comonomer unit in the second binder include a vinyl cyanide unit, an acrylic monomer, an α, β-unsaturated carboxylic acid or an acid anhydride thereof, a vinyl-based monomer, an allyl-based monomer, and olefin. Examples of the vinyl cyanide unit include acrylonitrile and methacrylonitrile. Examples of the acrylic monomer include acrylic acid, methacrylic acid, acrylic acid ester, methacrylic acid ester, acrylic amide, and methacrylic amide. Examples of the α, β-unsaturated carboxylic acid include α, β-unsaturated carboxylic acids other than acrylic acid and methacrylic acid. Examples of such unsaturated carboxylic acids include maleic acid and fumaric acid. Examples of the vinyl-based monomer include vinyl ester, vinyl ether, an aromatic vinyl compound or a halide thereof, and a vinyl halide. Examples of the allyl-based monomer include allyl ester and allyl ether. Examples of the olefin include ethylene, propylene, and halides thereof. Examples of the halide of the vinyl-based monomer (also including vinyl halide) and the halide of the olefin include fluoride and chloride. Other comonomers may have substituents. Examples of the substituent include, but are not limited to, the following groups: a hydroxy group, hydroxyalkyl group, alkoxy group, carboxy group, alkoxycarbonyl group, acyl group, sulfonic acid group, sulfonic acid ester group, phosphonic acid group, phosphoric acid ester group, phosphonic acid ester group, amino group, alkylamino group, and acylamino group. These other comonomers are merely illustrative and not limited to these. The second binder may include one kind, or two or more kinds of other comonomer units.

For the third binder, for example, fluorocarbon resin, polyolefin resin, polyamide resin, polyimide resin, acrylic resin, vinyl resin, polyvinylpyrrolidone, polyethersulfone, rubber particles, and the like can be used. However, the third binder is different from the first binder and the second binder. The positive electrode mixture layer may include a kind of a third binder, and may include two or more kinds.

The ratio of the total amount of the first binder and the second binder to the entire binder contained in the positive electrode mixture layer is, for example, 50 mass% or more, 80 mass% or more, or 90 mass% or more. The entire binder contained in the positive electrode mixture layer may be composed of only the first binder and the second binder.

As the conductive agent, for example, a known one can be used. Examples of the conductive agent include carbon black, conductive fibers, and carbon fluoride. Examples of the carbon black include acetylene black. Examples of the conductive fiber include carbon fibers and metal fibers. Carbon fibers also include carbon nanotubes. The positive electrode mixture layer may contain one kind of conductive agents, and may contain two or more kinds.

The positive electrode mixture layer can be formed by coating a positive electrode slurry in which a positive electrode mixture containing the positive electrode active material, the binders, and a conductive agent is dispersed in a dispersion medium on a surface of a positive electrode current collector and drying the slurry. The coating film after drying is usually compressed in the thickness direction of the coating.

The average particle size of the positive electrode active material used in the positive electrode slurry is preferably 10 µm or more, because stress is easily applied to the positive electrode active material particles when forming the positive electrode mixture layer. The average particle size of the positive electrode active material used in the positive electrode slurry is preferably set to 13 µm or less, in view of easy cost reduction.

The average particle size of the positive electrode active material used in the positive electrode slurry means a particle size (in other words, a volume average particle size) having a volume integrated value of 50% in the particle size distribution measured by the laser diffraction scattering method.

### (Negative electrode)

The negative electrode includes, for example, a negative electrode mixture layer containing a negative electrode active material and a negative electrode current collector carrying a negative electrode mixture layer. The negative electrode active material includes at least a carbon material which absorbs and releases lithium ions.

As the negative electrode current collector, for example, a metal foil can be used. As a metal composing the negative electrode current collector, a metal which does not react with lithium metal is preferable, and for example, copper, nickel, iron, and an alloy containing any of these metal elements can be used.

The negative electrode mixture layer can be formed, for example, by coating a negative electrode slurry in which a negative electrode mixture is dispersed in a dispersion medium on a surface of a negative electrode current collector and drying the slurry. The dried film may be rolled, if necessary. The negative electrode mixture layer may be formed on one surface of the negative electrode current collector, or on both surfaces thereof.

The negative electrode mixture includes a negative electrode active material as an essential component, and may include a binder, a conductive agent, a thickener, and the like as an optional component. As the binder, conductive agent, and thickener, for example, a known material can be used. The binder may be selected from the first to third binders exemplified for the positive electrode mixture layer. The conductive agent may be selected from those exemplified for the positive electrode mixture layer. Further, the negative electrode active material contains a carbon material which absorbs and releases lithium ions as an essential component.

Examples of the carbon material which absorbs and releases lithium ions include graphite, graphitizable carbon, and non-graphitizable carbon. Graphitizable carbon is sometimes referred to as soft carbon. Non-graphitizable carbon is sometimes referred to as hard carbon. Preferred among them is graphite, which is excellent in stability during charging and discharging and has small irreversible capacity. Further, the negative electrode active material may include a material other than a carbon material. It is preferable that 80 mass% or more or 90 mass% or more of the negative electrode active material is graphite.

The graphite is a carbon material having developed graphite-type crystalline structures, and may be, for example, graphite having a plane spacing d002 of (002) plane measured by X-ray diffractometry of 3.4 Å or less. The crystallite size of the graphite may be 100 Å or more. The crystallite size is measured, for example, by Scherrer method.

Examples of materials other than the carbon material that can be used as the negative electrode active material include alloy-based materials. The alloy-based material is a material containing at least one kind of metal capable of forming an alloy with lithium, and includes, for example, silicon, tin, a silicon alloy, a tin alloy, a silicon compound, and the like.

As the alloy-based material, a composite material having a lithium ion conductive phase and silicon particles dispersed in the phase may be used. As the lithium ion conductive phase, a silicate phase, a silicon oxide phase in which 95 mass% or more is silicon dioxide, or the like may be used.

### (Nonaqueous Electrolyte)

The nonaqueous electrolyte includes a nonaqueous solvent and a lithium salt dissolved in the nonaqueous solvent. The concentration of the lithium salt in the nonaqueous electrolyte is, for example, 0.5 to 2 mol/L. The nonaqueous electrolyte may contain known additives.

As the nonaqueous solvent, for example, a cyclic carbonic acid ester, a chain carbonic acid ester, a cyclic carboxylic acid ester, or the like is used. Examples of the cyclic carbonic acid ester include propylene carbonate and ethylene carbonate. Examples of the chain carbonic acid ester include diethyl carbonate, ethyl methyl carbonate, and dimethyl carbonate. Examples of the cyclic carboxylic acid ester include γ-butyrolactone and γ-valerolactone. The non-aqueous solvent may be used singly, or two or more kinds thereof may be used in combination.

As the lithium salt, for example, a lithium salt of chlorine-containing acid, a lithium salt of fluorine-containing acid, a lithium salt of fluorine-containing acid imide, a lithium halide, or the like can be used. Examples of the lithium salt of the chlorine-containing acid include LiClO₄, LiAlCl₄, and LiB₁₀Cl₁₀. Examples of the lithium salt of the fluorine-containing acid include LiPF₆, LiBF₄, LiSbF₆, LiAsF₆, LiCF₃SO₃, and LiCF₃CO₂. Examples of the lithium salt of the fluorine-containing acid imide include LiN(CF₃SO₂)₂, LiN(CF₃SO₂)(C₄F₉SO₂), and LiN(C₂F₅SO₂)₂. Examples of the lithium halide include LiCl, LiBr, and LiI. The lithium salt may be used singly, or two or more kinds thereof may be used in combination.

### (Separator)

A separator may be interposed between the positive electrode and the negative electrode. The separator is excellent in ion permeability and has suitable mechanical strength and electrically insulating properties. The separator may be, for example, a microporous thin film, a woven fabric, or a nonwoven fabric. The separator is preferably made of, for example, polyolefin, such as polypropylene and polyethylene.

### (Nonaqueous electrolyte secondary battery)

The type and shape of the nonaqueous electrolyte secondary battery are not particularly limited. For example, the shape can be appropriately selected from various shapes such as cylindrical, coin-shaped, prism-shaped, sheet-shaped, and flat. The type of the electrode group is not particularly limited, and may be, for example, a wound type, a stack type, or the like.

As an example, FIG. 1 shows a longitudinal cross-sectional view of a cylindrical nonaqueous electrolyte secondary battery. A nonaqueous electrolyte secondary battery 100 includes a wound-type electrode group 40 and a nonaqueous electrolyte (not shown). The electrode group 40 includes a positive electrode 10, a negative electrode 20, and a separator 30, each having a strip shape. A positive electrode lead 13 is connected to the positive electrode 10, and a negative electrode lead 23 is connected to the negative electrode 20. One end portion in the length direction of the positive lead 13 is connected to the positive electrode 10, and the other end thereof is connected to a sealing plate 90. The sealing plate 90 includes a positive electrode terminal 15. One end of the negative electrode lead 23 is connected to the negative electrode 20 and the other end thereof is connected to the bottom of a battery case 70 serving as a negative electrode terminal. The battery case (battery can) 70 is made of metal, for example, formed of iron. To the top and bottom of the electrode group 40, a resin upper insulating ring 80 and a resin lower insulating ring 60 are disposed, respectively. In the illustrated example, a cylindrical battery having a wound-type electrode group has been described, but the present embodiment can be applied without being limited to this case.

### [Examples]

The present invention will be described in detail below with reference to Examples and Comparative Examples. The present invention, however, is not limited to the following Examples.

### Examples 1-3 and Comparative Example 1

A lithium nickel composite oxide as a positive electrode active material, a binder, acetylene black, and N-methyl-2-pyrrolidone (NMP) were mixed at a predetermined mass ratio to prepare a positive electrode slurry. As a binder, polyvinylidene fluoride as a first binder and a modified butadiene rubber (containing an acrylonitrile unit) as a second binder were used. The ratio of the second binder to the total amount of the first binder and the second binder was the value shown in Table 1. The ratio of the total amount of the first binder and the second binder to the solid content (in other words, the positive electrode mixture layer) of the positive electrode slurry was set to 1 mass%. As the lithium-nickel composite oxide, NCAl(LiNi_{0.9}Co_{0.05}Al_{0.05}O₂, D50:12 µm) or NCA₂(LiNi_{0.9}Co_{0.04}Al_{0.06}O₂, D50:12 µm) was used.

The positive electrode slurry was applied to both surfaces of an aluminum foil as a positive electrode current collector, and the coating was dried, and then rolled to form a positive electrode mixture layer on both surfaces of the aluminum foil. In this manner, a positive electrode for a nonaqueous electrolyte secondary battery was produced.

### Comparative Examples 2 to 3

A positive electrode was produced in the same manner as in Example 1 or Example 3 except that the second binder was not used.

### Evaluation

### (1) Friction coefficient

The friction coefficient on the surface of the positive electrode mixture layer of the positive electrode was determined by the above-described procedure.

### (2) Positive electrode active material density

The density of the positive electrode active material in the positive electrode was determined by the above-described procedure.

The results are shown in Table 1. In Table 1, E1 to E3 are Examples 1 to 3, and R1 to R3 are Comparative Examples 1 to 3.

**Table 11**

| | E1 | E2 | E3 | R1 | R2 | R3 |
|---|---|---|---|---|---|---|
| Positive electrode active material | NCA1 | NCA1 | NCA2 | NCA1 | NCA1 | NCA2 |
| Ratio of second binder (mass%) | 8 | 34 | 8 | 45 | 0 | 0 |
| Friction coefficient of positive electrode mixture layer | 0.32 | 0.31 | 0.31 | 0.27 | 0.29 | 0.29 |
| Positive electrode active material density (g/cm³) | 3.7 | 3.71 | 3.68 | 3.65 | 3.65 | 3.6 |

As shown in Table 1, when the ratio of the second binder was less than 5 mass% or more than 35 mass%, the friction coefficient of the positive electrode mixture layer was low, and the positive electrode active material density was also reduced. On the other hand, in the positive electrode of the Examples in which the ratio of the second binder is 5 mass% or more and 35 mass% or less, the friction coefficient of the positive electrode mixture layer is increased as compared with the Comparative Examples, so that the positive electrode active material density was improved.

### Nonaqueous electrolyte secondary battery

A nonaqueous electrolyte secondary battery was produced using the positive electrode produced in Examples. The nonaqueous electrolyte secondary battery was produced by the following procedure.

### (1) Preparation of negative electrode

Artificial graphite (average particle size: 30 µm), acetylene black, and polyvinylidene fluoride were mixed at a predetermined mass ratio, and NMP was added to prepare a negative electrode slurry. Next, the negative electrode slurry was applied to a surface of electrolytic copper foil, which was the negative electrode current collector, and the coating was dried and then rolled to form negative electrode mixture layers on both surfaces of the copper foil.

### (2) Preparation of nonaqueous electrolyte

A nonaqueous electrolyte was prepared by dissolving LiPF₆ in a mixed solvent containing ethylene carbonate and diethyl carbonate in a volume ratio of 3:7 at a concentration of 1.0 mol/L.

### (3) Assembly of Nonaqueous Electrolyte Secondary Battery

A lead tab was attached to each of the positive electrode and negative electrode, and an electrode group was produced by winding the positive electrode and negative electrode in a spiral shape with a separator interposed so that the leads were positioned at the outermost peripheral portion. The electrode group was inserted into an exterior body made of a laminated film having an aluminum foil as a barrier layer, and after vacuum drying at 105°C for 2 hours, the electrolyte was injected, and an opening of the exterior body was sealed to obtain a nonaqueous electrolyte secondary battery.

When charging and discharging were performed using the obtained nonaqueous electrolyte secondary battery, a high capacity corresponding to the positive electrode active material density was obtained.

### [Industrial Applicability]

Since the nonaqueous electrolyte secondary battery provided with the positive electrode according to the present disclosure has a high capacity, the nonaqueous electrolyte secondary battery can be used for an electronic device such as a cellular phone, a smart phone, or a tablet terminal, an electric vehicle including a hybrid, a plug-in hybrid, a household storage battery combined with a solar battery, or the like.

### [Reference Signs List]

10 Positive electrode
13 Positive electrode lead
15 Positive electrode terminal
20 Negative electrode
23 Negative electrode lead
30 Separator
40 Electrode group
60 Lower insulation ring
70 Battery case
80 Upper insulating ring
90 Sealing plate
100 Nonaqueous electrolyte secondary battery

## Claims

1. A positive electrode for a nonaqueous electrolyte secondary battery, the positive electrode comprising a positive electrode mixture layer, wherein
the positive electrode mixture layer includes a positive electrode active material, a first binder, and a second binder,
the positive electrode active material includes a composite oxide represented by the following formula (1):
LiₐNiₓCo_{y}Me_{(1-x-y)}O₂ (1)
where 0.97 ≦ a ≦ 1.2, 0.5 ≦ x ≦ 1, and 0 ≦ y ≦ 0.1, the element Me is at least one selected from the group consisting of Al, Mn, B, W, Sr, Mg, Mo, Nb, Ti, Si, and Zr,
the first binder is a polymeric binder comprising at least a vinylidene fluoride unit,
the second binder is a polymeric binder comprising at least a diene unit, and
a ratio of the second binder to a total amount of the first binder and the second binder is 5 mass% or more and 35 mass% or less.

2. The positive electrode for a nonaqueous electrolyte secondary battery according to claim 1, wherein a friction coefficient of the positive electrode mixture layer is 0.3 or more and 0.5 or less.

3. The positive electrode for a nonaqueous electrolyte secondary battery according to claim 1 or 2, wherein the first binder and the second binder in total occupy the positive electrode mixture layer by 0.4 mass% or more and 1.5 mass% or less.

4. The positive electrode for a nonaqueous electrolyte secondary battery according to any one of claims 1 to 3, wherein 0.8 ≦ x ≦ 1 is satisfied.

5. The positive electrode for a nonaqueous electrolyte secondary battery according to any one of claims 1 to 4, wherein Me includes at least Al.

6. The positive electrode for a nonaqueous electrolyte secondary battery according to claim 5, wherein 0.01 ≦ y ≦ 0.05 is satisfied.

7. The positive electrode for a nonaqueous electrolyte secondary battery according to claim 5 or 6, wherein Me further includes Mn, and
an atomic ratio of Mn to Al is 0.9 or less.

8. A nonaqueous electrolyte secondary battery comprising the positive electrode according to any one of claims 1 to 7, a negative electrode, and a lithium ion conductive nonaqueous electrolyte.
